Europäisches Patentamt

European Patent Office

Office européen des brevets

(11) Veröffentlichungsnummer : **0 399 165 B1**

## (12) EUROPÄISCHE PATENTSCHRIFT

(45) Veröffentlichungstag der Patentschrift :
**28.10.92 Patentblatt 92/44**

(51) Int. Cl.[5] : **E04G 23/02,  F16B 13/14,**
**E04B 2/30**

(21) Anmeldenummer : **90105524.4**

(22) Anmeldetag : **23.03.90**

(54) **Injektionsbefestigungsanker.**

(30) Priorität : **22.05.89 DE 3916612**

(43) Veröffentlichungstag der Anmeldung :
**28.11.90 Patentblatt 90/48**

(45) Bekanntmachung des Hinweises auf die
Patenterteilung :
**28.10.92 Patentblatt 92/44**

(84) Benannte Vertragsstaaten :
**AT BE CH DE DK ES FR GB IT LI NL**

(56) Entgegenhaltungen :
**DE-A- 2 615 316**
**GB-A- 1 515 162**
**GB-A- 2 134 169**

(73) Patentinhaber : **fischerwerke Artur Fischer**
**GmbH & Co. KG**
**Weinhalde 14 - 18**
**W-7244 Waldachtal 3/Tumlingen (DE)**

(72) Erfinder : **Haug, Willi**
**Märzenbergstrasse 37**
**W-7290 Freudenstadt/Musbach (DE)**
Erfinder : **Mayer, Horst**
**Illerweg 3**
**W-2000 Hamburg 65 (DE)**

**Beschreibung**

Die Erfindung betrifft einen Injektionsbefestigungsanker gemäß der Gattung des Anspruches 1.

Aus der GB-A-1 515 162 ist ein Injektionsbefestigunganker bekannt, der zur Sanierung von zweischaligem Mauerwerk verwendet wird. Der Befestigungsanker wird durch eine Bohrung des Verblendmauerwerks eingeführt und durch den dahinterliegenden Hohlraum zwischen Verblendmauer- und Tragmauerwerk in die im Tragmauerwerk befindliche Bohrung eingesetzt. Der Befestigungsanker besteht aus einem Blechrohr, das in dem zwischen Verblendmauerwerk und Tragmauerwerk befindlichen Freiraum eine geschlossene Hülse bildet. In den Bereichen, in denen der Befestigungsanker im Verblendmauerwerk und im Tragmauerwerk eingebettet ist, weist dieser Öffnungen auf. Die Öffnungen des Befestigungsankers sind zu dem Zweck vorgesehen, einen Austritt des durch den Befestigungsanker eingespritzten Bindemittels im Bereich des Verblendmauerwerks und Tragmauerwerks zu ermöglichen. Zur Erhöhung der Stabilität des Verbundes zwischen Trag- und Verblendmauerwerk ist in dem Ankerrohr ein Ankerdraht eingeschoben, der am vorderen und hinteren Ende des Ankerrohres etwa bündig abschließt. Dadurch entsteht eine starre Verbindung zwischen Tragmauerwerk und Verblendmauerwerk, die keinen Ausgleich bei Verschiebungen zwischen dem Trag- und Verblendmauerwerk, beispielsweise aufgrund unterschiedlicher Wärmedehnung, zuläßt. Dies kann zu starken Verspannungen in den Befestigungsankern führen. Aufgrund solcher Verspannungen können sich im Mauerwerk Risse bilden oder die Befestigungsanker und der Klebeverbund zerstört werden.

Besteht das Tragmauerwerk aus mit Hohlräumen versehenen Bausteinen, so ist es beispielsweise aus der DE-A 38 15 551 bekannt, über den im Tragmauerwerk eingesetzten Teil des Ankerrohres einen Kunststoffstrumpf zu stülpen, der sich nach Einspritzen des Bindemittels in den Befestigunganker und nach dessen Austritt durch die vorgesehenen Öffnungen im Bereich der Hohlräume ausdehen kann.

Die bekannten Befestigungsanker sind außerdem in ihrer Herstellung kostenintensiv und wenig montagefreundlich. Des weiteren ergibt sich ein erhöhter Verbrauch beim Einspritzen des Bindemittels, da die bekannten Befestigunganker zumindest im Verblendmauerwerk keine Begrenzung der Füllmenge aufweisen.

Der Erfindung liegt die Aufgabe zugrunde, einen Injektionsbefestigungsanker für die Befestigung eines Verblend mauerwerks an einem Tragmauerwerk, zu schaffen, der kostengünstig herstellbar und einfach montierbar ist, sowie eine spannungsfreie Verschiebung zwischen Verblendmauerwerk und Tragmauerwerk zuläßt.

Die Lösung dieser Aufgabe wird bei einem Injektionsbefestigungsanker der eingangs genannten Gattung durch die im kennzeichnenden Teil des Hauptanspruches angegebenen Merkmale erhalten. Der erfindungsgemäße Injektionsbefestigungsanker eignet sich zur Einpressung von Mörtel, was zur Kostenreduzierung bei Sanierungsmaßnahmen beiträgt. Der mittels eines Adapters in die Bohrung des Verblendmauerwerks eingepreßte Mörtel kann sich in diesem verhärten. Ein Austreten des Mörtels in den zwischen Verblendmauerwerk und Tragmauerwerk befindlichen Hohlraum wird dabei dadurch verhindert, daß die Eingangsöffnung des Ankerrohrs eine konische Aufweitung aufweist, die formschlüssig in der Bohrung des Verblendmauerwerks einliegt. Der in die Bohrung eingeleitete Mörtel wird daher in seinem weiteren Verlauf lediglich in die geschlossene Hülse des Ankerrohrs geführt und in den hinteren, dem Tragmauerwerk zugewandten Teil des Ankerrohrs gefördert. Die Verbindung zwischen dem Verblendmauerwerk und dem Tragmauerwerk wird dabei durch den aus dem Ankerrohr herausragenden, im verhärteten Mörtel einliegenden Ankerdraht gewährleistet. Es ist deshalb nicht erforderlich, daß das im Verblendmauerwerk einliegende Ankerrohr die gesamte, im Verblendmauerwerk befindliche Bohrung durchzieht, vielmehr ist es ausreichend, daß lediglich der vordere Teil des Ankerrohrs mit dessen konischer Aufweitung noch im Bohrloch des Blendmauerwerks einliegt, um eine Weiterleitung des in das Bohrloch eingeführten Mörtels gewährleisten zu können und dessen Austreten in den zwischen Tragmauerwerk und Verblendmauerwerk befindlichen Hohlraum zu verhindern. Aufgrund der im hinteren Bereich des Ankerrohrs vorgesehenen Durchgangslöcher ist es ermöglicht, daß im Bereich des Tragmauerwerks der in das Ankerrohr eingepreßte Mörtel austreten und sich dort verhärten kann.

Ein Rücklauf von Mörtel und ein dadurch eventuell bedingtes Austreten aus dem Tragmauerwerk in den zwischen Verblendmauerwerk und Tragmauerwerk befindlichen Hohlraum wird dadurch unterbunden, daß im mittleren Bereich des Ankerrohrs eine Erhöhung ausgebildet ist, die die im Tragmauerwerk vorgesehene Bohrung in ihrem Randbereich abdichtet.

Eine Weiterbildung der Erfindung sieht vor, daß das Ankerrohr an seinem der Eingangsöffnung gegenüberliegenden Ende mittels einer Verschlußkappe abgeschlossen ist. Hierdurch ist gewährleistet, daß der durch das Ankerrohr eingepreßte Mörtel im Bereich der Bohrung des Tragmauerwerks lediglich seitlich aus den Durchgangslöchern des Ankerrohrs austritt und sich dort verhärten kann.

Der erfindungsgemäße Injektionsbefestigungsanker ist bevorzugt so ausgeführt, daß dessen Ankerrohr sowie die Verschlußkappe aus Kunststoff bestehen. Die Herstellungskosten des erfindungsgemäßen Injektionsbefestigungsankers sind daher niedrig anzusetzen. Auch ist aufgrund des gewählten Materials eine gewisse Elastizität des Ankerrohrs gegeben. Eine besonders vorteilhafte Weiterbildung der Erfindung sieht vor, daß der im Ankerrohr einliegende Draht aus Edelstahl besteht. Die durch den Ankerdraht erzielte Verbindung zwischen dem Verblendmauerwerk und dem Tragmauerwerk weist daher insbesondere die erforderliche Elastizität auf, um leichte Verformungen oder Verschiebungen zwischen Verblend- und Tragmauerwerk ausgleichen zu können. Die Gefahr, die für eine Verbindung zwischen Verblend- und Tragmauerwerk daraus resultieren könnte, daß bei Verformungen das Ankerrohr beschädigt werden könnte, und die Verbindung somit gelöst werden könnte, ist daher ausgeschlossen, da selbst bei Beschädigungen des Ankerrohrs die Verbindung durch den darin einliegenden, elastischen Ankerdraht gewährleistet wird. Dessen Beschaffenheit sichert auch die Dauerhaftigkeit der Verbindung, da Korrosionsschäden, die durch ein eventuelles Auftreten von Feuchtigkeit im Mauerwerk bedingt sein könnten, nicht auftreten können. Eine besonders vorteilhafte Weiterbildung der Erfindung sieht vor, daß über den hinteren Bereich des Ankerrohrs bis zu dessen mittiger Erhöhung ein Kunststoffstrumpf aufgezogen sein kann. Hierdurch kann eine sichere Verankerung des Injektionsbefestigungsankers in aus Bausteinen mit Hohlräumen bestehendem Tragmauerwerk sichergestellt werden. Der durch die Bohrung im Verblendmauerwerk in den Injektionsbefestigungsanker eingepreßte Mörtel dehnt im Bereich des so beschaffenen Tragmauerwerks mit Austreten durch die Durchgangslöcher den Kunststoffstrumpf in den Hohlräumen der Bausteine aus und verhärtet in diesem Zustand, wodurch die Verankerung bewirkt wird. Eine Beschleunigung des Verhärtungsvorganges wird durch den Kunststoffstrumpf unterstützend dadurch herbeigeführt, daß durch diesen das im Mörtel befindliche Wasser austritt und dieser somit schneller aushärten kann.

Die Erfindung wird nachfolgend anhand der Zeichnungen näher erläutert.

Es zeigen:

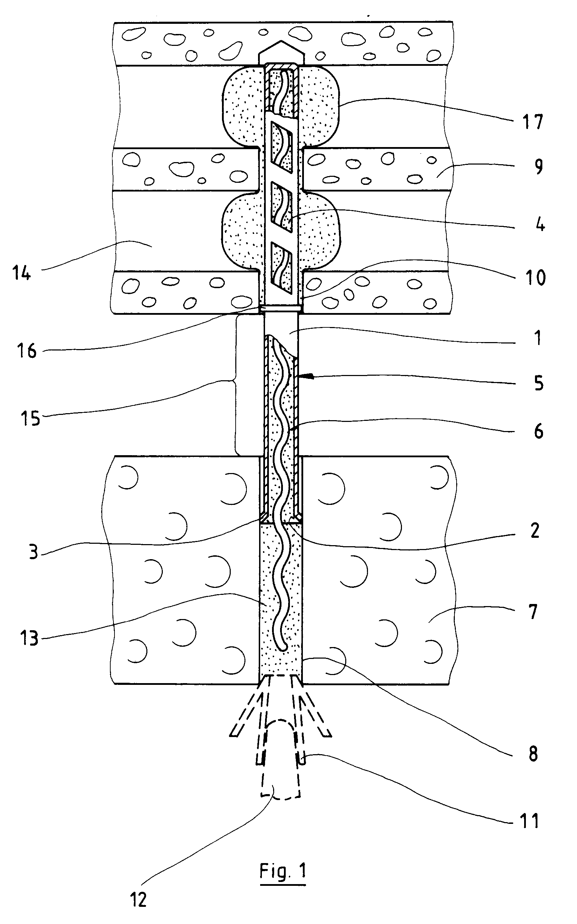

Figur 1 einen erfindungsgemäßen Injektionsbefestigungsanker.

Der in Figur 1 dargestellte erfindungsgemäße Injektionsbefestigungsanker 5 besteht aus einem Ankerrohr 1, das in seinem vorderen, der Eingangsöffnung 2 zugewandten Bereich eine geschlossene Hülse darstellt, die an der Eingangsöffnung 2 eine Dichtlippe 3 aufweist und in seinem hinteren Bereich Durchgangslöcher 4 vorsieht. Im Injektionsbefestigungsanker 5 liegt ein Ankerdraht 6 ein. Der Injektionsbefestigunganker 5 wird durch eine im Verblendmauerwerk 7 befindliche Bohrung 8 in eine im Tragmauerwerk 9 vorgesehene Bohrung 10 eingesetzt. Durch einen Adapter 11 wird mittels einer Mörtelpresse 12 Mörtel 13 in das Bohrloch der Bohrung 8 eingepreßt und durch das Ankerrohr 1 des Injektionsbefestigungsankers 5 in das Tragmauerwerk 9 weitergeführt. Durch die im diesem Bereich vorgesehenen Durchgangslöcher 4 tritt schließlich der Mörtel 13 in die Bohrung 10 bzw. in eventuelle Hohlräume 14 des Tragmauerwerks 9 aus. Ein Austreten des Mörtels 13 aus der Bohrung 8 oder aus der Bohrung 10 in den zwischen Verblendmauerwerk 7 und Tragmauerwerk 9 befindlichen Hohraum wird dadurch verhindert, daß an der stirnseitigen Eingangsöffnung 2 des Injektionsbefestigungsankers 5 eine Dichtungslippe 3 ausgebildet ist, die formschlüssig das Bohrloch der Bohrung 8 abschließt sowie dadurch, daß im Bereich der Bohrung 10 am Ankerrohr 1 eine Erhöhung 16 vorgesehen ist, die ebenfalls ein Austreten von Mörtel 13 in den Hohlraum 15 verhindert. Für den Fall, daß das Tragmauerwerk 9 aus Bausteinen mit Hohlräumen 14 besteht, wird über den hinteren Bereich des Ankerrohrs 1 des Injektionsbefestigungsankers 5 ein Kunststoffstrumpf 17 aufgezogen, der sich bei Austreten des Mörtels 13 aus den Durchgangslöchern 4 ausdehnt und nach Verhärtung des Mörtels 13 eine feste Verankerung des Injektionsbefestigungsankers 5 gewährleistet. Eine feste, dauerhafte Verbindung zwischen Verblendmauerwerk 7 und Tragmauerwerk 9 ist durch den aus Edelstahl bestehenden Ankerdraht 6 sichergestellt. Bei Auftreten von Verformungen am Verblendmauerwerk 7 oder am Tragmauerwerk 9 sowie bei Verschiebungen der beiden Mauerwerke gegeneinander werden dabei die auftretenden Kräfte nicht vom Ankerrohr, sondern vom Ankerdraht 6 aufgenommen. Da dieser eine weit höhere Elastizität als das Ankerrohr 1 aufweist, ist selbst bei größeren Verschiebungen von Verblend- und Tragmauerwerk gegeneinander eine ausreichende Verbindung gewährleistet, da diese selbst für den Fall, daß das Ankerrohr 1 beschädigt werden sollte, nicht unterbrochen wird. Im Bereich der Mauerwerke oder der darin befindlichen Hohlräume 14 oder 15 auftretende Feuchtigkeit vermag die Dauerhaftigkeit der Verbindung nicht zu beeinflussen, da der aus Edelstahl bestehende Ankerdraht 6 für Korrosionseinwirkungen nicht anfällig ist.

**Patentansprüche**

1.  Injektionsbefestigungsanker für die Befestigung eines Verblendmauerwerks (7) an einem Tragmauerwerk (9) mit einem Durchgangslöcher aufweisenden Ankerrohr (1), wobei dem Ankerrohr (1) ein Ankerdraht (6) einliegt, **dadurch gekennzeichnet,** daß der Ankerdraht (6) mit einem etwa den halben Dicke des Verblendmauerwerks (7) entsprechenden Länge das Ankerrohr (1) an seiner stirnseitigen Eingangsöffnung überragt, und daß das Ankerrohr (1) an dieser Eingangsöffnung (2) eine Dichtlippe (3) aufweist, in seinem weiteren Verlauf bis zu desseen etwa mittigen Bereich eine geschlossene Hülse bildet und die Durchgangslöcher (4) in seinem hinteren Bereich angeordnet sind.

2. Injektionsbefestigungsanker nach Anspruch 1, **dadurch gekennzeichnet,** daß im mittleren Bereich des Ankerrohrs (1) eine Erhöhung (16) ausgebildet ist.

3. Injektionsbefestigungsanker nach Anspruch 1 oder 2, **dadurch gekennzeichnet,** daß das Ankerrohr (1) an seinem der Eingangsöffnung (2) gegenüberliegenden Ende verschlossen ist.

4. Injektionsbefestigungsanker nach einem der vorhergehenden Ansprüche, **dadurch gekennzeichnet,** daß dessen Ankerrohr (1) aus Kunststoff besteht.

5. Injektionsbefestigungsanker nach Anspruch 1, **dadurch gekennzeichnet,** daß der dem Ankerrohr (1) einliegende Ankerdraht (6) aus Edelstahl besteht.

6. Injektionsbefestigungsanker nach Anspruch 5, **dadurch gekennzeichnet,** daß der Ankerdraht (6) eine Wellenlinienform aufweist.

7. Injektionsbefestigungsanker nach einem der vorhergehenden Ansprüche, **dadurch gekennzeichnet,** daß über den hinteren Bereich des Ankerrohrs (1) bis zu dessen mittiger Erhöhung (16) ein Kunststoffstrumpf (17) aufgezogen ist.

**Claims**

1. A fixing anchor for anchoring by injection for fixing facing masonry (7) to load-bearing masonry (9), with an anchoring tube (1) having throughholes, with an anchoring wire (6) lying inside the anchoring tube (1), characterized in that the anchoring wire (6) projects by a length corresponding approximately to half the thickness of the facing masonry (7) beyond the anchoring tube (1) at the end-face entry opening thereof, and the anchoring tube (1) has at this entry opening (2) a sealing lip (3), continues in the form of a closed sleeve to approximately its middle region, and the through-holes (4) are arranged in its rear region.

2. A fixing anchor for anchoring by injection according to claim 1, characterized in that a raised part (16) is formed in the middle region of the anchoring tube (1).

3. A fixing anchor for anchoring by injection according to claim 1 or 2, characterized in that the anchoring tube (1) is closed at its end opposite the entry opening (2).

4. A fixing anchor for anchoring by injection according to one of the preceding claims, characterized in that the anchoring tube (1) thereof consists of plastics material.

5. A fixing anchor for anchoring by injection according to claim 1, characterized in that the anchoring wire (6) lying in the anchoring tube (1) consists of stainless steel.

6. A fixing anchor for anchoring by injection according to claim 5, characterized in that the anchoring wire (6) has a corrugated form.

7. A fixing anchor for anchoring by injection according to one of the preceding claims, characterized in that a plastics sleeve (17) is pulled on over the rear region of the anchoring tube (1) as far as the central raised part (16) thereof.

**Revendications**

1. Tirant à ancrage par injection, destiné à fixer un mur de parement (7) à un mur d'appui (9) et comportant un tube (1) d'ancrage percé d'ouvertures, ce tube (1) logeant un fil métallique (5) d'ancrage, tirant caractérisé en ce que le fil (6) d'ancrage fait saillie de l'orifice d'entrée du tube (1) sur une longueur correspondant sensiblement à la moitié de l'épaisseur du mur de parement (7), et en ce que ce tube (1) comporte, à cet orifice d'entrée (2), une lèvre (3) de joint et forme jusqu'à la moitié de sa longueur, environ, une douille fermée, les ouvertures (4) étant pratiquées dans sa partie postérieure.

2. Tirant selon la revendication 1, caractérisé en ce qu'une protubérance (16) est formée sur la partie médiane du tube (1).

3. Tirant selon la revendication 1 ou 2, caractérisé en ce que le tube (1) est obturé à son extrémité opposée à son orifice d'entrée (2).

4. Tirant selon l'une des revendications précédentes, caractérisé en ce que son tube (1) est en matière plastique.

5. Tirant selon la revendication 1, caractérisé en ce que le fil (6) logé dans le tube (1) est en acier spécial ou inoxydable.

6. Tirant selon la revendication 5, caractérisé en ce que le fil (6) est ondulé.

7. Tirant selon l'une des revendications précédentes, caractérisé en ce qu'un gant (17) en matière plastique est glissé sur la partie postérieure du tube (1), jusqu'à la protubérance (16) formée dans la partie médiane du tube (1).

Fig. 1